# FASCICULE DE BREVET EUROPEEN

(11) **EP 0 571 262 B1**
(45) Date de publication et mention de la délivrance du brevet: **03.01.1996**
(21) Numéro de dépôt: 93401260.0
(22) Date de dépôt: 17.05.1993
(51) Int. Cl.: B29C 49/68, B29C 49/64

(54) **Unité pour le traitement thermique de récipients en PET lors de la fabrication de ceux-ci**
Vorrichtung für die thermische Behandlung von PET-Behältern während der Herstellung
Device for the thermal treatment of PET containers during their production

(30) Priorité: 20.05.1992 FR 9206126
(43) Date de publication de la demande: 24.11.1993
(73) Titulaire: SIDEL, F- 76053 Le Havre Cedex (FR)
(72) Inventeur: Evrard, Alain, F-76600 Le Havre (FR); Denis, Gérard, F-76280 Turretot (FR)
(74) Mandataire: Gorrée, Jean-Michel

(56) Documents cités:
- EP-A- 0 237 459
- EP-A- 0 442 836

## Description

La présente invention concerne des perfectionnements apportés aux unités de traitement thermique utilisées au cours de la fabrication de récipients, tels que des bouteilles, en polyéthylènetéréphtalate (PET) aptes à subir, en cours d'utilisation, sans déformations notables, des conditions thermiques relativement sévères rencontrées au cours de processus tels que leur remplissage avec un liquide chaud ou la pasteurisation de leur contenu.

Selon la demande de brevet FR. 2 658 119 au nom de la Demanderesse, un procédé approprié à la fabrication de tels récipients consiste à :
a) chauffer, à une température au moins égale à la température de ramollissement du PET, le corps seul (en excluant le goulot) d'une préforme du récipient constituée en PET amorphe, avec le goulot du récipient déjà conformé à sa forme et à ses dimensions définitives ;
b) mouler le corps de préforme chaud pour constituer un récipient intermédiaire dont le corps possède des dimensions supérieures d'environ 20 % en hauteur et de 0 à 30 % transversalement aux dimensions du récipient définitif à obtenir, tandis que les parois de conformation par moulage du récipient intermédiaire sont refroidies à une température d'environ 5 à 40°C ;
c) chauffer ensuite le corps du récipient intermédiaire à une température de 160 à 240°C pendant une durée d'environ 1 à 5 mn ; et, pendant tout ou partie de la durée de chauffage du corps, on chauffe également le goulot dans des conditions de température et de durée propres à assurer la cristallisation du PET du goulot seul, puis on procède à un refroidissement relativement lent du goulot ;
d) puis enfin mouler une nouvelle fois le corps rétréci chaud du récipient intermédiaire obtenu à la fin de l'étape précédente à sa forme et à ses dimensions définitives pendant une durée d'environ 2 à 6 secondes.

Pour la mise en oeuvre de ce procédé, la demande de brevet précitée propose également une installation de fabrication de récipient qui comporte notamment une unité de traitement thermique apte à réaliser l'étape c) du procédé précité. Dans un aspect particulier correspondant à une mise en oeuvre dudit procédé préférée en raison de la simplicité de conception qui l'accompagne, l'unité de traitement thermique comprend :
- un dispositif de chauffage pour chauffer l'ensemble du récipient intermédiaire, corps et goulot, le corps étant chauffé pour assurer la "recouvrance" et l'accroissement de la cristallinité du PET du corps à une température d'environ 160 à 240°C et le goulot étant quant à lui chauffé dans des conditions de température et de durée propres à assurer la cristallisation du PET dudit goulot seul ;
- des moyens de refroidissement agencés pour abaisser la température de l'ensemble du récipient, goulot et corps, le refroidissement du goulot étant conduit de façon relativement lente pour assurer la cristallisation du PET dudit goulot ;
- éventuellement, mais de préférence intégré dans ladite unité de traitement thermique, un autre dispositif de chauffage agencé pour chauffer le corps du récipient avant le moulage définitif de l'étape d) du procédé.

L'avantage essentiel procuré par l'unité de traitement thermique de l'installation de fabrication proposée dans la demande de brevet FR 2 658 119 était de réunir deux étapes -cristallisation sphérolitique du PET du seul goulot et traitement thermique du corps du récipient- qui jusqu'alors étaient exécutées de façon distincte respectivement dans un four de cristallisation et dans un four dit de "recouvrance". Par "recouvrance", on entend la relaxation des contraintes internes induites dans le PET lors de l'opération de biétirage -étape b) du procédé précité-conduisant au récipient intermédiaire, le matériau étant laissé libre de se déformer, cette étape de recouvrance conduisant alors à un récipient à corps rétréci et irrégulier.

Toutefois, la réalisation pratique d'une telle unité de traitement thermique se heurte à diverses difficultés qui conduisent à remettre en cause la simple juxtaposition bout-à-bout du four de cristallisation et du four de "recouvrance" déjà connus.

La difficulté essentielle réside dans la recherche d'une optimisation de la consommation d'énergie de l'unité compatible avec le respect du déroulement précis des étapes du procédé mis en oeuvre. En effet, l'énergie thermique, développée par chauffage électrique, engendrée dans les fours nécessite, pour être exploitée au mieux et éviter le gaspillage énergétique, que les récipients défilent dans le four en étant disposés aussi prêt que possible les uns des autres de manière que tous le flux de rayonnement soit intercepté par le matériau à traiter. Or, au cours du traitement, le matériau se déforme considérablement comme cela a été indiqué plus haut : le récipient intermédiaire qui est introduit dans le four de "recouvrance" est surdimensionné par rapport au récipient final (par exemple récipient intermédiaire d'un diamètre d'environ 110 mm pour un récipient final de 1,5 l d'un diamètre d'environ 90 mm) alors que le récipient sortant du four de recouvrance est notablement rétréci et sous-dimensionné (diamètre d'environ 80 mm dans l'exemple considéré). De ce fait, le choix d'un pas d'espacement entre récipients successifs compatible avec le diamètre important des récipients intermédiaires conduit à une déperdition importante d'énergie thermique (et donc à une consommation électrique excessive eu égard au résultat obtenu) dans les étapes suivantes portant sur les récipients rétrécis qui sont alors trop espacés les uns des autres.

Une autre difficulté de même nature est afférente aux conditions de cristallisation du goulot des récipients. Lorsque la cristallisation était effectuée, sur les goulots ou cols des préformes, dans une étape initiale, les préformes pouvaient être juxtaposées les unes à la suite des autres de sorte que le rendement thermique du chauffage de cristallisation était satisfaisant. Par contre, la cristallisation du matériau du goulot, dans le procédé précité, s'effectue sur un récipient dont le diamètre du corps, supérieur à celui du goulot, entraîne un écartement notable des goulots des récipients successifs préjudiciable à un bon rendement thermique. A titre d'exemple, l'entraxe des goulots, qui était de 65 mm pour les préformes passe à 140 mm pour des récipients. Il en résulte une diminution notable du rendement thermique et un accroissement de la longueur du four de cristallisation.

Toujours pour ce qui concerne le rendement énergétique, il faut noter que les fours utilisés jusqu'à présent sont équipés de tubes de chauffage, étagés sur la hauteur du corps des récipients à chauffer, qui émettent un rayonnement infrarouge de courte longueur d'onde et de résistances chauffantes de sorte que les corps des récipients traversant le four sont chauffés principalement, non pas directement par le rayonnement infrarouge, mais indirectement par l'ambiance chaude du four (chauffage par convection). Il en résulte que le rendement énergétique de ce type de four est médiocre et que la consommation d'électricité est élevée.

Par ailleurs, le déroulement correct des différentes étapes du traitement des récipients impose le respect notamment des durées du traitement du matériau, aussi bien en ce qui concerne le chauffage que le refroidissement. Si une maîtrise correcte des conditions de chauffage, notamment en réduisant au maximum les déperditions de manière que la fraction la plus importante possible de l'énergie thermique fournie parvienne effectivement dans le matériau à traiter, permet d'envisager une réduction au plus juste de la durée de chauffage, par contre le refroidissement ou abaissement de température doit s'effectuer dans des conditions de durée parfaitement contrôlées (d'environ 20 à 25 secondes par exemple) de façon à conserver une cristallisation effective et homogène dans le matériau. Or, la recherche de débits de fabrication toujours plus grands (par exemple 6000 récipients/heure) implique des vitesses élevées de déplacements des récipients dans l'installation, et donc l'allongement des parcours dans les postes de refroidissement pour respecter les durées de refroidissement requises. Il en résulte un allongement corrélatif des installations qui accroissent les coûts d'implantation.

Une autre difficulté réside dans la nécessité d'une protection thermique efficace de la mécanique mobile qui doit être à même de fonctionner sans difficultés dans des ambiances à températures variables (entre 100 et 200°C), avec des températures très élevées (de l'ordre de 200°C) dans les zones de chauffage intense.

L'invention a donc essentiellement pour objet de proposer un agencement perfectionné d'unité de traitement thermique de récipients, notamment en PET, lors de la fabrication de ceux-ci qui combine un chauffage du corps du récipient intermédiaire, un chauffage de cristallisation du seul goulot dudit récipient et un refroidissement contrôlé de l'ensemble du récipient propre à assurer une cristallisation effective et homogène du goulot, ainsi que de préférence un nouveau chauffage du récipient préalablement au moulage définitif de celui-ci, cette unité de traitement thermique devant, selon l'invention, fonctionner avec un rendement thermique notablement amélioré conduisant à une réduction sensible de la consommation d'énergie électrique, procurer conjointement un meilleur contrôle des paramètres de traitement du matériau des récipients conduisant à des caractéristiques améliorées des récipients finaux sortant de fabrication, présenter des caractéristiques structurelles propres à assurer un fonctionnement fiable à grande vitesse (par exemple 6000 récipients/heure ou plus) malgré des températures locales élevées (au moins 200°C), tout en étant d'un encombrement réduit.

A ces fins, l'invention propose une unité de traitement thermique au défilé utilisée au cours de la fabrication continue de récipients, tels que des bouteilles, en polyéthylènetéréphtalate (PET) aptes à subir, en cours d'utilisation, sans déformations notables, des conditions thermiques relativement sévères rencontrées au cours de processus tels que leur remplissage avec un liquide chaud ou la pasteurisation de leur contenu, ladite unité comportant:
- des moyens de chauffage pour chauffer l'ensemble de chaque récipient, corps et goulot, le corps, en PET ayant préalablement subi une biorientation, étant chauffé à une température d'environ 160 à 240°C pour l'obtention d'une recouvrance, puis d'un accroissement de cristallinité et le goulot en PET encore amorphe étant chauffé dans des conditions de température et de durée propres à assurer la cristallisation sphérolitique du PET du seul goulot ;
- et des moyens de refroidissement agencés pour abaisser la température de l'ensemble de chaque récipient, goulot et corps, le refroidissement du goulot étant conduit de façon relativement lente pour assurer la cristallisation du PET dudit goulot ;
laquelle unité de traitement thermique, étant agencée conformément à l'invention, se caractérise essentiellement en ce que, en combinaison :
- les moyens de chauffage de l'ensemble du récipient comprennent :
   = des moyens de chauffage du corps des récipients situés en regard et à proximité du corps des récipients et s'étendant de façon continue sur approximativement la hauteur dudit corps, lesdits moyens de chauffage du corps étant agencés pour émettre vers le corps un rayonnement infrarouge moyen ayant une longueur d'onde supérieure ou égale à 2 µm, lesdits moyens de chauffage du corps comprenant des moyens de chauffage pour la "recouvrance" et des moyens de chauffage pour l'accroissement du taux de cristallinité (cristallisation) du PET du corps ;
   = des moyens de chauffage du goulot des récipients s'étendant en regard du goulot des récipients et agencés pour émettre vers le goulot un rayonnement infrarouge court ayant une longueur d'onde inférieure ou égale à 2 µm, lesdits moyens de chauffage du goulot étant associés à un mandrin de chauffage interne introduit à l'intérieur du goulot, lesdits moyens de chauffage du goulot s'étendant, au moins en partie, après les moyens de chauffage des corps pour la "recouvrance" et en combinaison avec les moyens de chauffage pour la cristallisation du corps ;
- et des moyens de modification du pas d'espacement des récipients sont prévus qui sont agencés de manière telle que les récipients présentent un grand pas d'espacement en regard des moyens de chauffage des corps dans la zone de recouvrance alors que lesdits corps ont une relativement grande dimension transversale, et un pas réduit d'espacement en regard des moyens de chauffage des corps et des goulots dans la zone de cristallisation alors que les corps chauffés se sont rétractés et ont des dimensions transversale et longitudinale réduites.

Pour regrouper dans un même ensemble les divers moyens de chauffage nécessaires au traitement thermique du récipient et simplifier ainsi l'agencement global, réduire les coûts de fabrication et d'exploitation et diminuer l'emprise de l'installation, il est souhaitable que l'unité de traitement thermique comprenne en outre des moyens de chauffage final des corps des récipients préalablement au moulage définitif de ceux-ci, lesdits moyens de chauffage final étant situés après les moyens de refroidissement.

De préférence, les moyens de chauffage des corps des récipients sont constitués sous forme de plaques de chauffage s'étendant sur approximativement la hauteur desdits corps et émettant un rayonnement infrarouge moyen de longueur d'onde supérieure ou égale à 2 µm, lesdites plaques pouvant être toutes disposées d'un même côté du trajet suivi par les corps des récipients, avec un miroir disposé en regard desdites plaques de l'autre côté du trajet des corps, ou bien les plaques pouvant être disposées face-à-face, de part et d'autre du trajet suivi par les corps des récipients afin d'améliorer la régularité et l'homogénéité du chauffage des corps.

De préférence encore, les moyens de chauffage des goulots des récipients en vue de la cristallisation du PET sont constitués sous forme de tubes de chauffage s'étendant parallèlement à la direction de déplacement des récipients et émettant un rayonnement infrarouge court de longueur d'onde inférieure ou égale à 2 µm dans sa majeure partie.

Grâce aux dispositions essentielles de l'invention, on assure un écartement approximativement constant entre les récipients successifs quelle que soit la dimension transversale de ceux-ci, c'est-à-dire d'abord entre des récipients de grandes dimensions et donc de grand diamètre, puis entre des récipients qui ont été chauffés et se sont rétractés et qui présentent donc alors un plus petit diamètre. On peut faire en sorte que l'écartement entre récipients successifs soit aussi réduit que souhaité, en évitant impérativement toutefois que les récipients se touchent et en laissant une marge de sécurité suffisante pour que des récipients mal positionnés ou rétractés de façon asymétrique puissent tourner sur eux-mêmes sans toucher les récipients adjacents (les récipients étant mis en rotation sur eux-mêmes, au cours de leur déplacement à travers l'unité de traitement thermique, pour être exposés uniformément au rayonnement thermique provenant, en général, d'une source latérale). A titre d'exemple, l'entre-axe entre récipients successifs sera d'environ 140 mm pour les récipients de grande dimension (diamètre du corps d'environ 110 mm) et d'environ 105 mm pour les récipients rétractés, dans un processus de fabrication de bouteilles d'une contenance de 1,5 l, qui à l'état achevé, présente un diamètre de corps de 90 mm. Les récipients constituent donc ainsi un rideau approximativement régulier qui défile devant les moyens de chauffage et qui reçoit la plus grande partie du rayonnement thermique en provenance desdits moyens de chauffage situés latéralement pour l'essentiel.

Pour ce qui est maintenant des moyens de chauffage, leur cission en deux types de moyens de chauffage de caractéristiques différentes permet d'adapter parfaitement le chauffage du goulot, d'un côté, et le chauffage du corps, d'un autre côté, aux conditions particulières nécessaires à un chauffage approprié de ces deux parties du récipient, conditions particulières qui sont inhérentes aux épaisseurs fort différentes du matériau (par exemple environ 0,2 à 0,3 mm pour le corps et environ 2 à 3 mm pour le goulot).

Pour le chauffage rapide du corps, on emploie un rayonnement infrarouge moyen (λ ≧ 2 µm) pour lequel le PET est pratiquement opaque et qui par conséquent, étant absorbé par la paroi mince du corps, chauffe celle-ci en un temps très bref. De plus, le recours à une source de rayonnement constituée par une succession de plaques s'étendant approximativement sur toute la hauteur du corps du récipient permet d'émettre vers celui-ci un flux de rayonnement régulier et homogène sur toute la hauteur du corps. Il en résulte là encore une meilleure efficacité du chauffage. En outre, l'emploi de plaque en lieu et place des batteries de tubes couramment utilisés jusqu'à présent peut conduire à une réduction du câblage électrique. En outre, les plaques se révèlent moins fragiles que les tubes. Il en résulte globalement un coût d'installation et d'entretien moindre et une plus grande fiabilité de la machine.

On peut aussi ajouter que l'emploi d'un chauffage par rayonnement procure une souplesse d'utilisation et de réglage qu'il était impossible d'obtenir avec le chauffage d'ambiance (chauffage par convection) qui était employé jusqu'à présent. En particulier les plaques de chauffage peuvent être décomposées en sous-plaques juxtaposées, étagées selon la hauteur du corps du récipient et commandées individuellement de manière à chauffer de façon précise et sélective des zones du corps du récipient (par exemple zones correspondant à des épaisseurs différentes du matériau).

Cette amélioration du traitement thermique du matériau constitutif du corps a des répercussions très importantes sur la qualité des récipients finalement obtenus. En effet, le chauffage rapide parfaitement maîtrisé du PET du corps conduit à un taux de cristallisation sensiblement supérieur à celui qui était obtenu jusqu'à présent (40 à 50 %, contre 35 à 40 % avec un four antérieur), ce qui se traduit par l'obtention d'un module d'Young plus élevé, et donc une meilleure tenue en température des récipients achevés. Ceux-ci peuvent supporter un remplissage avec un liquide chaud à 100-105°C, contre seulement 95°C pour les récipients fabriqués auparavant. De plus la paroi du corps du récipient présente une épaisseur beaucoup plus uniforme, et donc une meilleure résistance mécanique en raison de la disparition des zones de faiblesse correspondant à des zones d'épaisseur moindre dans les récipients antérieurs.

Enfin, on ajoutera que l'emploi d'un chauffage des corps des récipients par rayonnement en lieu et place du chauffage ambiant antérieur conduit à une obtention beaucoup plus rapide de la température nécessaire à la "recouvrance" (160-240°C, de préférence environ 200°C), durée qui peut maintenant être réduite à environ 5 à 5,5 secondes.

Pour illustrer ces propos, on peut indiquer que, grâce à la conjonction d'un chauffage amélioré et à une modification du pas d'espacement des récipients, la puissance électrique installée a été diminuée de 20 % environ, par rapport à un four antérieur, pour le seul chauffage des corps.

Par contre, pour ce qui est maintenant du chauffage du goulot des récipients, l'emploi du même rayonnement infrarouge moyen (λ ≧ 2 µm) que pour le chauffage des corps conduirait à un chauffage non homogène et à la création d'un gradient thermique à travers l'épaisseur du matériau en raison de la propagation relativement lente de la chaleur à partir de la face extérieure, qui serait seule chauffée, du goulot. Il est donc ici beaucoup plus judicieux de mettre en oeuvre un autre processus faisant appel à un rayonnement riche en infrarouge court (λ ≦ 2 µm) pour lequel le PET est pratiquement transparent et qui, ayant traversé l'épaisseur de matériau du goulot, parvient sur un mandrin disposé à l'intérieur du goulot.

Là encore, le recours à un processus parfaitement adapté pour le chauffage des goulots à une température propre à générer la cristallisation sphérolitique du PET permet à la fois de diminuer le temps de chauffage et de réduire l'énergie électrique nécessaire.

Dans le même exemple typique que celui donné plus haut pour la recouvrance des corps, la durée de chauffage des goulots était, antérieurement, de 65 secondes pour un entre-axe des récipients de 65 mm, ce qui correspondait à une durée de 97 secondes pour un entre-axe de 105 mm. Avec l'agencement selon l'invention, la durée de chauffage des goulots est de 25 à 30 secondes pour un entre-axe de 105 mm des récipients, avec des sources de rayonnement situées de chaque côté d'une trajectoire linéaire. Par ailleurs, la puissance électrique installée a été notablement diminuée dans les conditions propres à l'invention.

En définitive, en cumulant les diverses dispositions propres à l'invention, la puissance électrique installée nécessaire pour le chauffage des corps et la cristallisation des goulots a été réduite d'environ 28 % pour cette seule partie de l'unité de traitement thermique.

Par ailleurs on peut indiquer dès-à-présent que, compte tenu des simplifications structurelles procurées par l'intégration des processus de recouvrance du corps et de cristallisation du goulot et de diverses améliorations dont il est question plus loin, le coût d'un four de recouvrance/cristallisation selon l'invention est d'environ 28 % inférieur aux coûts cumulés d'un four de recouvrance et d'un four de cristallisation nécessaires antérieurement.

Dans un mode de réalisation préféré, l'unité de traitement thermique conforme à l'invention se caractérise en ce qu'elle comprend, pour le transport des récipients, une chaîne transporteuse sans fin comportant une succession de maillons articulés les uns aux autres autour d'axes respectifs, chaque maillon étant pourvu d'un organe de support d'un récipient respectif par le goulot de celui-ci; en ce que les moyens de modification du pas d'espacement des récipients comprennent :
- des bras radiants solidaires respectivement des maillons de la chaîne transporteuse et s'étendant transversalement auxdits maillons, lesdits bras étant pourvus à leur extrémité libre des susdits organes de support de récipients,
- un support curviligne convexe pour supporter de façon mobile les maillons de la chaîne transporteuse avec les bras desdits maillons s'étendant vers l'extérieur de la convexité, procurant ainsi un grand pas d'espacement entre les récipients, et
- au moins un support rectiligne succédant au susdit support curviligne, pour supporter de façon mobile les maillons de la chaîne transporteuse avec les bras desdits maillons approximativement parallèles entre eux, procurant ainsi un pas réduit d'espacement entre les récipients ;
et en ce que les moyens de chauffage des corps des récipients et les moyens de chauffage des goulots des récipients sont conformés approximativement parallèlement au parcours de la chaîne transporteuse, les moyens de chauffage des corps des récipients pour la recouvrance étant disposés approximativement parallèlement au support curviligne de la chaîne transporteuse et les moyens de chauffage des goulots de récipients étant, au moins en partie, disposés approximativement parallèlement au support rectiligne de la chaîne transporteuse.

Grâce à cet agencement, le pas d'espacement des récipients est modifié, en fonction de la courbure du support curviligne convexe et de la longueur des bras, depuis un grand pas d'espacement dans le parcours curviligne de la chaîne transporteuse en regard des moyens de chauffage des corps des récipients pour la recouvrance, alors que lesdits corps ont une relativement grande dimension transversale, jusqu'à un pas réduit dans le parcours rectiligne de la chaîne transporteuse en regard des moyens de chauffage des corps et des goulots des récipients pour la cristallisation, alors que les corps se sont rétractés et ont des dimensions transversale et longitudinale réduites.

Avantageusement, le support curviligne de la chaîne transporteuse est une roue tournante et les moyens de chauffage des corps des récipients pour la recouvrance sont disposés selon un contour approximativement en arc de cercle sensiblement parallèlement au bord de ladite roue.

De façon souhaitable, les moyens de chauffage pour la cristallisation des goulots s'étendent, en partie, dans la zone d'implantation des moyens de chauffage des corps des récipients pour la recouvrance. Les moyens de chauffage des goulots peuvent alors être combinés avec les moyens de chauffage des corps au sein de mêmes plaques de grande hauteur s'étendant sur toute la hauteur (corps et goulot) des récipients de grande dimension.

La combinaison des dispositions qui précèdent permet de localiser les moyens de chauffage des corps des récipients pour la recouvrance et une partie des moyens de chauffage des goulots des récipients sur une extrémité curviligne de l'unité de traitement, de sorte que la partie rectiligne subséquente se trouve raccourcie d'autant. Il en résulte que l'unité de traitement thermique agencée selon l'invention est moins longue, et donc plus compacte que les installations antérieures.

Avantageusement encore, il est prévu des moyens de préchauffage des goulots des récipients avant que ceux-ci reçoivent lesdits mandrins dont le diamètre externe correspond au diamètre interne des goulots, ce grâce à quoi les goulots préchauffés sont enfoncés plus facilement sur les mandrins. De préférence, dans ce cas, chaque organe de support prévu à l'extrémité des bras de la chaîne transporteuse est constitué par le susdit mandrin mobile apte à être introduit à force dans le goulot du récipient et à supporter chaque récipient suspendu par son goulot.

Optionnellement, l'unité de traitement thermique peut comporter en outre des moyens de chauffage des fonds des récipients associés aux moyens de chauffage des corps pour l'accroissement de leur taux de cristallinité et situés en-dessous de ces derniers et latéralement de manière à chauffer les fonds des récipients sans provoquer une cristallisation de la zone centrale desdits fonds.

De façon souhaitable, les moyens de refroidissement comprennent des moyens de chauffage d'ambiance aptes à maintenir autour des récipients une température comprise entre 80 et 200°C, de préférence d'environ 100°C, ce grâce à quoi, en évitant un refroidissement trop important des récipients, on réduit l'écart entre la température du récipient entrant dans les moyens de chauffage final et la température du récipient chauffé dans ceux-ci ; par conséquent on réduit là encore la puissance électrique nécessaire auxdits moyens de chauffage final.

Il est en outre intéressant qu'en aval des moyens de chauffage final, il soit prévu des seconds moyens de modification du pas d'espacement des récipients aptes à accroître le pas d'espacement afin de permettre à un organe de préhension de chaque récipient de s'introduire entre les récipients successifs en vue du transfert des récipients hors de l'unité de traitement thermique.

Compte tenu des températures très élevées générées pour le chauffage des récipients (plus de 200°C), il est souhaitable de protéger la partie mécanique contre les effets perturbateurs dûs à ces températures élevées (grippage, dégradation des lubrifiants, etc.). Il est donc prévu que des moyens de protection thermique des organes mécaniques soufflent un rideau de gaz de refroidissement entre lesdits organes mécaniques et les moyens de chauffage, que le bâti de l'unité soit constitué au moins en partie de profilés tubulaires et que ledit gaz de refroidissement soit distribué par lesdits profilés tubulaires.

En cas d'immobilisation des récipients devant les plaques de chauffage, le PET surchauffé dégage des gaz qui sont auto-inflammables. Même si cette immobilisation s'accompagne d'une coupure de l'alimentation électrique des plaques, l'inertie thermique desdites plaques est telle que le risque d'incendie subsiste tout autant. Il est donc très souhaitable que l'unité de traitement thermique soit pourvue de moyens de sécurité associés aux plaques de chauffage, ces moyens de sécurité devant être agencés pour provoquer un accroissement de la distance séparant les plaques de chauffage et les récipients en cas d'immobilisation de ceux-ci. Ces moyens de sécurité peuvent agir sur les plaques de chauffage (plaques montées mobiles sur des glissières soit transversalement au trajet des récipients pour être écartées de ceux-ci, soit verticalement pour être montées au-dessus ou descendues au-dessous des récipients) ou bien encore sur les récipients (libération des récipients qui sont situés en regard des plaques et qui tombent), les moyens d'actionnement devant être des moyens non électriques, notamment des vérins pneumatiques, de manière qu'ils soient actifs en cas de coupure de l'alimentation électrique.

L'invention sera mieux comprise à la lecture de la description détaillée d'un mode de réalisation préféré donné uniquement à titre d'exemple non limitatif. Dans cette description on se réfère aux dessins annexés sur lesquels :
- la fig. 1 est une vue schématique en développement linéaire illustrant les étapes essentielles de traitement des récipients effectuées par l'unité de traitement conforme à l'invention ;
- la fig. 2 est une vue schématique de dessus montrant l'agencement général de l'unité de traitement thermique conforme à l'invention ainsi que la localisation des étapes essentielles de traitement des récipients montrées à la fig. 1 ;
- la fig. 3 est une vue très schématique de dessus d'une partie des moyens de transport de récipients de l'unité de traitement thermique de la fig. 2 ;
- la fig. 4 est une vue partielle en coupe verticale de l'organe de transport et de préhension des récipients, appartenant aux moyens de transport de la fig. 3 ;
- la fig. 5 est une vue en coupe transversale (selon la ligne V-V de la fig. 2) d'un four de recouvrance faisant partie de l'unité de traitement thermique de la fig. 2 ;
- la fig. 6 est une vue schématique de dessus d'une variante de réalisation du four de recouvrance montré aux fig. 2 et 5 ;
- la fig. 7 est une vue en coupe transversale, selon la ligne VII-VII de la variante de réalisation du four de recouvrance de la fig. 6 ;
- la fig. 8 est une vue en coupe transversale, selon la ligne VIII-VIII de la fig. 2, d'un four de cristallisation faisant partie de l'unité de traitement thermique de la fig. 2 ;
- la fig. 9 est une vue en coupe transversale, selon la ligne IX-IX de la fig. 2, des moyens de refroidissement contrôlé faisant partie de l'unité de traitement de la fig. 2 ;
- la fig. 10 est une vue en coupe transversale, selon la ligne X-X de la fig. 2, du four de chauffage final faisant partie de l'unité de traitement de la fig. 2 ; et
- la fig. 11 est une vue à plus grande échelle d'un détail du four de chauffage final de la fig. 10.

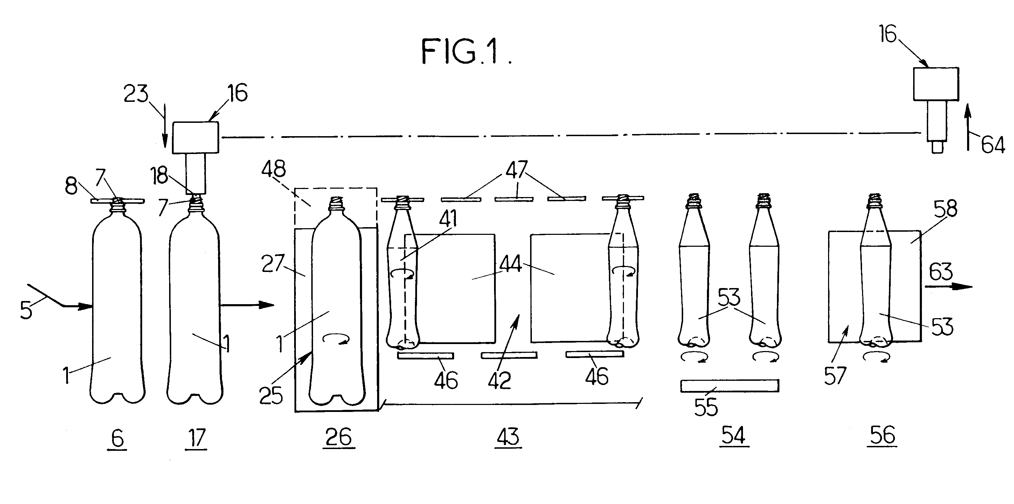

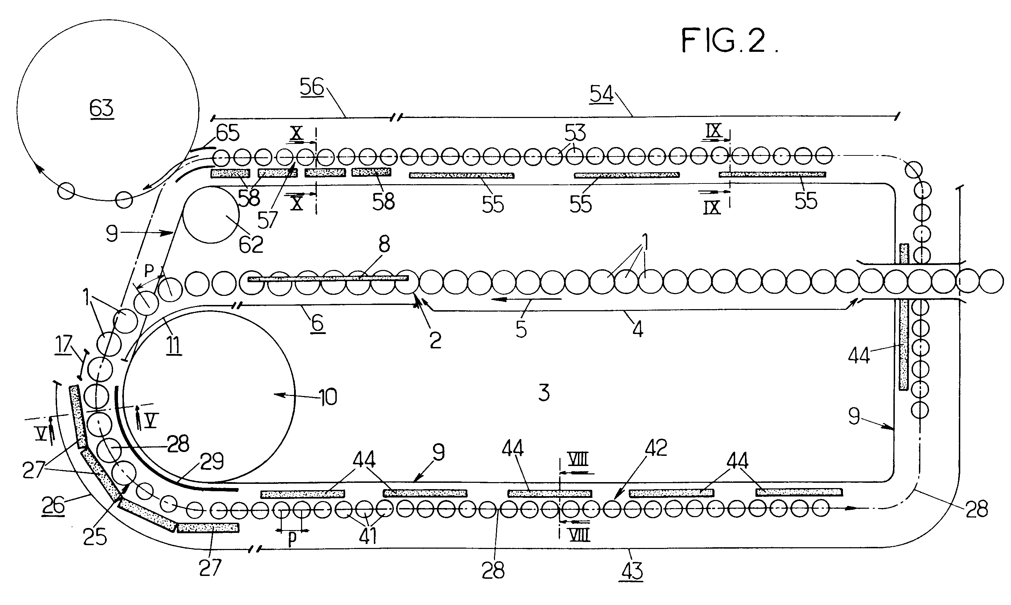

En se référant maintenant simultanément aux fig. 1 et 2, les récipients intermédiaires 1, à corps surdimensionné en PET biorienté provenant d'un processus de moulage antérieur, sont amenés (flèche 5) à l'entrée 2 de l'unité de traitement thermique (désignée dans son ensemble par la référence 3) par un toboggan 4.

Dans une zone 6 succédant à l'entrée 2, les récipients sont écartés les uns des autres avec un pas constant à l'aide de moyens connus à cet effet (par exemple système à vis sans fin appréhendant les récipients par leur corps) en même temps que le goulot 7 des récipients 1 subit un préchauffage à une température d'environ 50°C (tube de préchauffage 8) destiné à dilater légèrement le PET des goulots en vue d'une opération ultérieure qui sera indiquée plus loin.

Les récipients sont alors transférés (zone 11) dans des moyens de transport qui vont maintenant les déplacer à travers toute l'unité de traitement thermique 3 jusqu'à la sortie de celle-ci. Ces moyens de transport sont essentiellement constitués par une structure articulée fermée sur elle-même et formant une chaîne sans fin 9 à maillons mutuellement pivotants dont chacun est agencé pour supporter un récipient par son goulot. Lesdits moyens de transport comprennent en outre une roue d'entraînement de relativement grand diamètre sur laquelle s'enroule la chaîne sans fin 9 et qui sont agencés pour supporter et entraîner celle-ci, ainsi que des moyens moteurs assurant l'entraînement synchrone des moyens de mise au pas et de la roue d'entraînement 10.

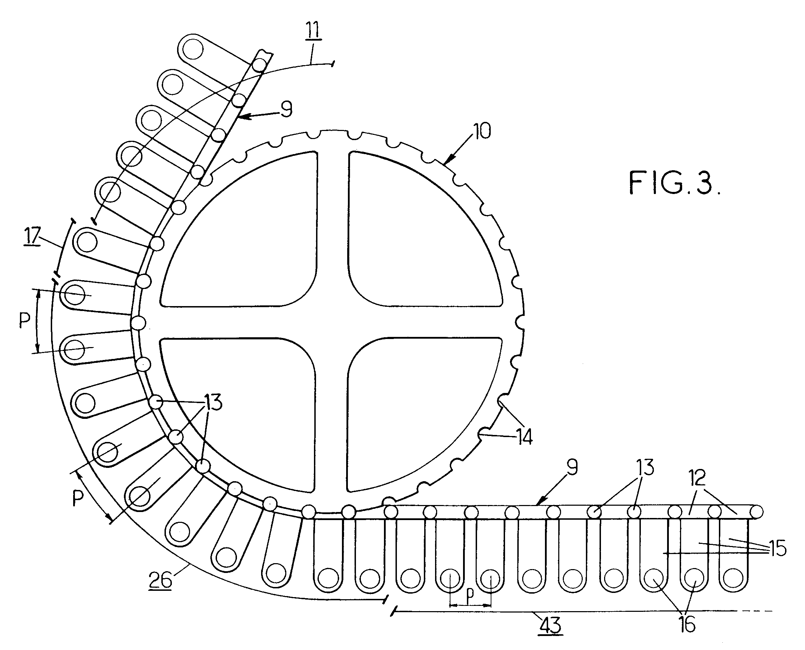

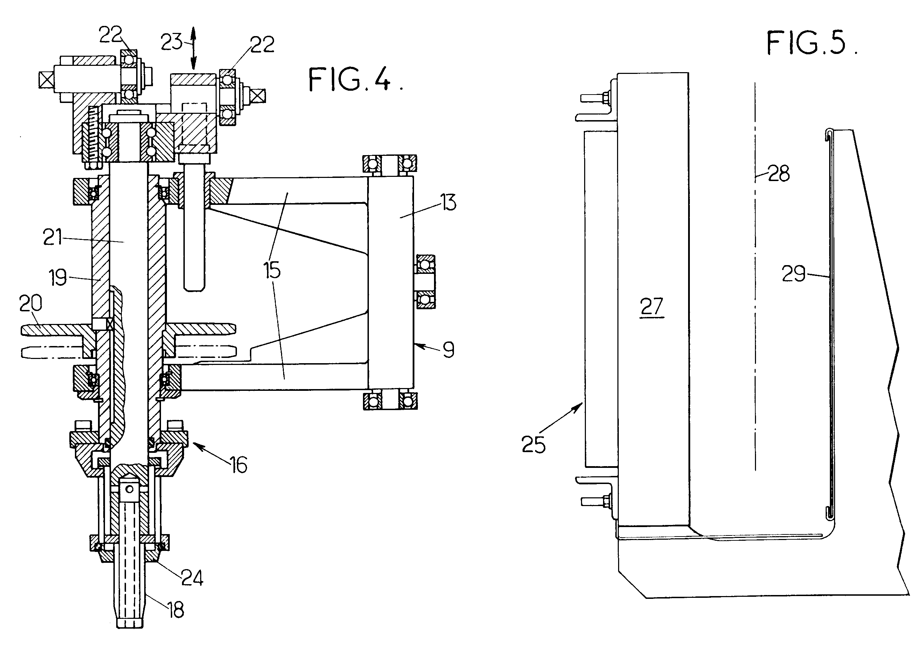

Pour ce qui est maintenant de la chaîne de transport 9 (voir fig. 3 et 4), elle est constituée d'une succession de chaînons 12 articulés à libre rotation les uns aux autres par des pivots 13 de gros diamètre qui sont aptes à s'emboîter dans des encoches radiales 14 prévues à la périphérie de la roue 10, laquelle assure ainsi le support et l'entraînement de la chaîne 9. Chaque chaînon 12 est muni d'un bras transversal 15 dirigé radialement vers l'extérieur (considéré lorsque la chaîne s'enroule sur la roue 10). Chaque bras est muni à son extrémité libre d'un organe 16 de préhension d'un récipient par son goulot.

Chaque organe de préhension 16 est agencé et commandé pour saisir un goulot de récipient de façon très rapide, à l'extrémité de la zone de transport 11 (zone de préhension 17 sur les fig. 1 à 3). A cet effet (voir fig. 4), chaque organe de préhension 16 comprend un mandrin vertical 18 mobile dans un fourreau 19 supporté à libre rotation par le bras 15. Une mise en rotation du mandrin 18 autour de son axe est assurée par une roue dentée 20 calée sur le fourreau 19 et coopérant avec une chaîne (non représentée) s'étendant tout au long du trajet de la chaîne de transport 9, de manière que, lors du passage devant les moyens de chauffage disposés latéralement, le corps et le goulot des récipients soient chauffés de façon homogène. En outre, l'extrémité supérieure d'une tige 21 prolongeant le mandrin 18 à travers le fourreau 19 et faisant saillie vers le haut au-delà de ce dernier est pourvue de galets 22 aptes à coopérer avec des cames latérales fixes (non montrées) pour soulever et abaisser (double flèche 23) séquentiellement le mandrin 18. Chaque mandrin 18 a un diamètre extérieur calibré correspondant au diamètre intérieur que doit présenter le goulot du récipient final. Le mandrin 18 est donc, dans la zone de préhension 17 (ou zone de "vétissage"), enfoncé dans le goulot 7 du récipient, jusqu'à la venue en contact d'une butée annulaire 24, entourant le mandrin 18 et portée par l'extrémité inférieure du fourreau 19, avec le bord du goulot, en forçant le PET précédemment chauffé et donc légèrement dilaté du goulot, de manière à conférer le diamètre nominal et à retenir ledit goulot par friction. Le mandrin va maintenant supporter ainsi le récipient jusqu'à la sortie de l'unité de traitement thermique.

On notera que la zone de préhension (ou de vêtissage) 17 est située immédiatement en aval du point où la chaîne 9 arrive en contact avec la roue dentée 10, alors que la chaîne 9 épouse la courbure de la roue 10. Le diamètre de la roue dentée 10, la longueur des chaînons 12 et la longueur des bras 15 sont déterminés de manière telle que, dès que la chaîne s'enroule sur la roue 10, les extrémités des bras radiants 15 s'écartent les uns des autres avec un entre-axe de valeur P correspondant à l'entre-axe avec lequel les récipients sous-jacents sont amenés.

Dès la sortie de la courte zone de vêtissage 17, les récipients, emmenés maintenant par la chaîne 9, pénètrent dans un premier four 25 de chauffage des corps des récipients -four de "recouvrance"- (zone 26) qui s'étend sur un peu plus d'un quart de tour de rotation de la roue 10 d'entraînement de la chaîne 9. Le four 25 comprend un ensemble de plaques de chauffage 27, disposées côte à côte extérieurement à la chaîne 9, en épousant approximativement la courbure de la trajectoire 28 suivie par l'axe des récipients (sur la fig. 2 quatre plaques successives sont mises en oeuvre, correspondant à un exemple typique de réalisation ; ce four est schématisé par une seule plaque à la fig. 1). Chaque plaque s'étend sur au moins la hauteur du corps des récipients.

Chaque plaque 27 est une source de rayonnement infrarouge moyen (c'est-à-dire ayant une longueur d'onde supérieure ou égale à 2 µm). Ce rayonnement, pour lequel le PET est pratiquement opaque, est donc arrêté par la paroi mince du corps des récipients et chauffe très rapidement le PET desdits corps jusqu'à une température de 160°C à 240°C, typiquement d'environ 200°C. La vitesse de défilement des récipients est telle que la durée du chauffage n'excède pas 20 à 30 secondes, et est typiquement de 5 à 5,5 secondes ; cette durée très faible de chauffage est rendue possible par le rendement thermique excellent du four 25, procuré d'une part par un choix pertinent du vecteur de chauffage -c'est-à-dire un chauffage par rayonnement avec une longueur d'onde appropriée- et, d'autre part, par un rapprochement optimal des récipients successifs qui, formant un véritable rideau quasi continu en regard des plaques 27, absorbent un maximum du rayonnement infrarouge émis.

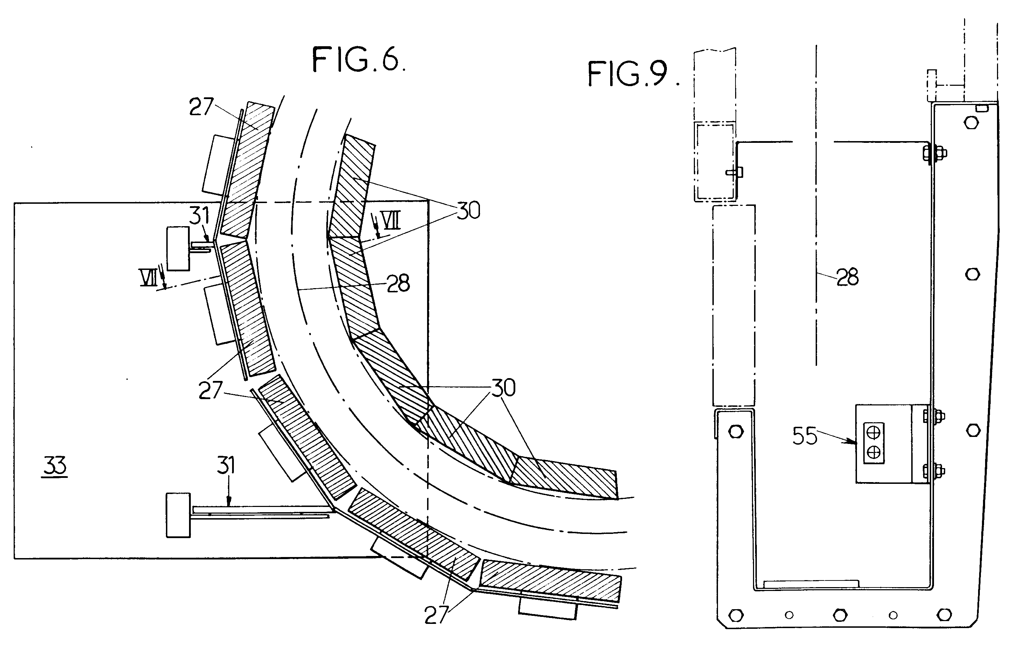

Pour améliorer encore le rendement du four, on peut prévoir un miroir curviligne convexe 29 situé en regard des plaques 27, de l'autre côté de la chaîne 9, qui réfléchit vers ces derniers la fraction de rayonnement infrarouge qui n'a pas été arrêtée dans sa trajectoire initiale. La figure 5 montre une coupe transversale du four 25 faite selon la ligne V-V de la figure 2.

Le recours à des plaques de chauffage (en lieu en place des tubes précédemment employés) procure de nombreux avantages supplémentaires. Si toutes les plaques sont alimentées électriquement de façon identique, le câblage électrique se trouve considérablement simplifié et les coûts d'installation et de montage en sont sensiblement réduits. Cependant, chaque plaque étant constituée de plusieurs plaques élémentaires ou sous-plaques superposées jointivement les unes au-dessus des autres, il est possible, pour certaines applications, de prévoir des régimes de fonctionnement différents pour les plaques élémentaires de manière à créer des conditions de chauffage sélectives appropriées des zones du corps étagées verticalement (par exemple en fonction de variations d'épaisseur de la paroi du récipient).

Pour améliorer les conditions de chauffage des corps des récipients, il est possible d'envisager une version perfectionnée du four de recouvrance, en remplaçant le miroir 29 par une seconde rangée de plaques de chauffage 30 située intérieurement à la courbure de la chaîne. A la fig. 6, on a représenté schématiquement en vue de dessus l'agencement d'un tel four amélioré, en conservant les mêmes références numériques. Les plaques extérieures 27 et les plaques intérieures 30 (respectivement au nombre de cinq dans cet exemple typique) sont situées de part et d'autre de la trajectoire suivie par les récipients (axe 28). Cet agencement, qui confère un chauffage plus homogène et plus réguliers des corps des récipients tournant sur eux-mêmes, permet d'obtenir des récipients dont les corps se sont rétractés et rétrécis d'une façon plus régulière circonférentiellement et qui présentent moins de déformations.

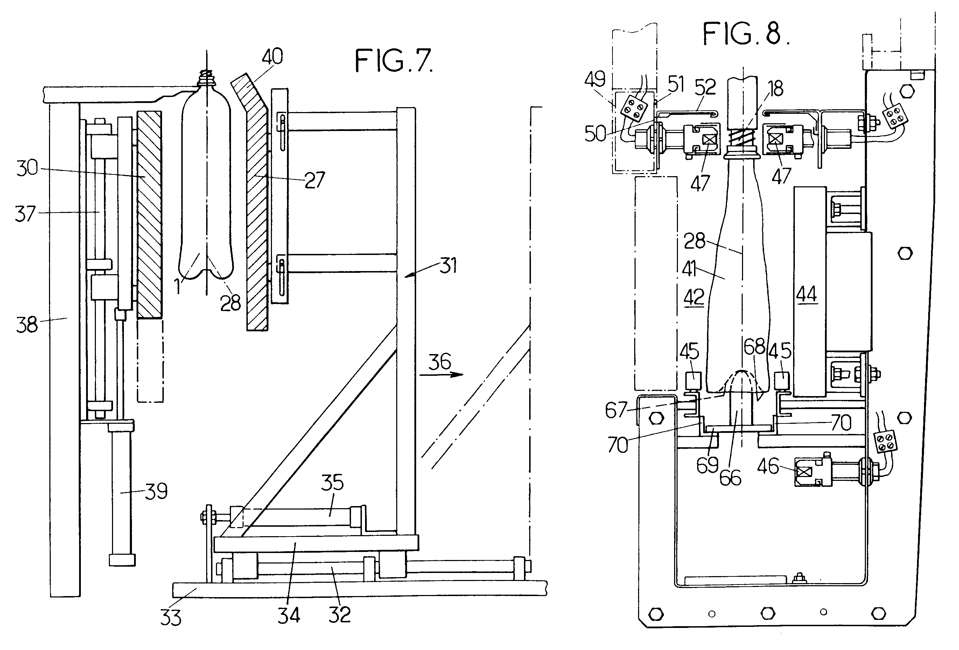

Pour améliorer la sécurité et éviter l'auto-inflammation du PET surchauffé en cas d'arrêt de fonctionnement de l'unité en cours de fabrication (coupure de l'alimentation électrique notamment) -surchauffe entraînée par la grande inertie thermique des plaques de chauffage 27/30-, on peut prévoir un montage particulier des plaques de chauffage 27/30 qui les écarte automatiquement de leur position de chauffage normale dès l'arrêt de la chaîne 9. Cet agencement est représenté schématiquement en vue de dessus à la fig. 6 et de façon plus détaillée à la fig. 7.

Pour ce qui est tout d'abord des plaques de chauffage extérieures 27, elles sont supportées à l'extrémité supérieure d'une potence 31 dont le piètement 34 est monté coulissant sur des glissières 32 reposant sur une plaque de support d'ensemble 33. Un vérin pneumatique 35 interposé entre la plaque de support 33 et le piètement 34 permet d'écarter (flèche 36) la potence 31, et donc les plaques de chauffage 27 par rapport aux récipients 1 (vers l'extérieur de la courbe suivie par la chaîne 9 dans l'exemple représenté). Comme représenté à la fig. 6, une potence peut être agencée pour supporter plusieurs plaques de chauffage 27.

Un autre agencement possible -intéressant en cas de manque de place disponible transversalement, comme c'est ici le cas pour les plaques de chauffage intérieures 30 en raison de la présence de la roue d'entraînement 10- consiste à déplacer verticalement (ici à faire descendre) les panneaux de chauffage. A cet effet, comme représenté à la fig. 7, les panneaux de chauffage 30 sont supportés par des glissières verticales 37 portées par un support approprié 38 et sont déplaçables sur ces glissières sous l'action d'un vérin pneumatique 39.

Le choix de vérins pneumatiques, associés à des moyens de déclenchement commandés par un arrêt de la chaîne 9, permet d'assurer le déplacement des plaques de chauffage 27/30 en cas de coupure d'alimentation électrique.

On notera également un agencement particulier de la plaque extérieure de chauffage 27 montrée à la fig. 7, qui est munie d'un panneau supplémentaire supérieur 40, incliné vers les récipients 1 afin de chauffer l'épaule de ceux-ci située sous le goulot.

A la sortie du four de recouvrance 25, la chaîne 9 se sépare de la roue d'entraînement et suit alors une trajectoire rectiligne. En raison de la suppression de la courbure conférée par la roue 10, courbure qui maintenait les extrémités des bras 15 de la chaîne 9, et donc les récipients, écartés les uns des autres avec un grand pas ou entre-axe P, les extrémités desdits bras sont maintenant rapprochées les unes des autres, les bras étant sensiblement mutuellement parallèles, et les récipients sont ainsi supportés avec un pas ou entre-axe réduit p compatible avec le diamètre réduit de leur corps rétréci (récipient 41).

Dès la sortie du four de recouvrance 25, les récipients rétractés entrent dans un four de cristallisation 42 (correspondant à une zone 43 sur les fig. 1 et 2) parcouru en ligne droite par la chaîne transporteuse 9. Ce four assure, d'une part, le chauffage des goulots pour la cristallisation sphérolitique du PET et, d'autre part, le chauffage des corps rétractés pour relever le taux de cristallinité du PET que la biorientation antérieure avait amené à une valeur d'environ 20 à 25 %.

Comme représentée à la fig. 2, le four de cristallisation 42 peut s'étendre de façon coudée selon deux lignes droites (ou une succession de lignes droites) raccordées par un (ou des) coude(s).

Pour maintenir à température élevée le corps des récipients 41 sortant du four de recouvrance afin d'accroître leur taux de cristallinité, le four de cristallisation comporte, comme représenté aux fig. 2 et 8, une succession de plaques de chauffage 44 agencées, comme les plaques de chauffage 27, pour émettre un rayonnement infrarouge moyen, leur hauteur étant adaptée à la hauteur plus réduite des corps rétractés des récipients 41.

Pour assurer un guidage des corps des récipients 41, on prévoit des galets fous 45, en un matériau inerte vis-à-vis du PET chaud et ramolli, par exemple en céramique, en regard du bas des corps. On évite ainsi que, même s'ils sont déformés et incurvés longitudinalement sous l'action de la chaleur, les corps des récipients ne viennent toucher les plaques de chauffage 44 et, compte tenu du ramollissement du PET, ces galets peuvent même procurer un redressement relatif des corps tordus, ce qui est bénéfique pour l'étape de soufflage final.

Pour améliorer encore le guidage et le maintien des récipients, on prévoit, toujours dans la zone de cristallisation, des plots de centrage 66 situés coaxialement en-dessous des mandrins 18 et agencés pour coopérer avec les fonds des récipients 41 ; en particulier ces plots 66, en forme de doigt, sont engagés dans la concavité 67 du fond 68 des récipients de manière que la rotation des récipients 41 sur eux-mêmes s'effectue autour de leur axe 28 matérialisé par l'axe commun du mandrin et du plot. Les plots 66 sont mutuellement espacés du même pas p que les mandrins et sont déplacés en synchronisme avec ceux-ci. A cet effet, ils peuvent être par exemple supportés par des plaquettes respectives 69 solidaires d'un organe d'entraînement sans fin (chaîne, courroie) -non visible sur la fig. 8- et guidées sur des cornières longitudinales en L 70 fixées au bâti.

Si l'on souhaite améliorer la cristallisation du fond du corps des récipients 41, on peut renforcer l'action des plaques de chauffage 44 en leur adjoignant des tubes de chauffage 46 (émettant, eux, un rayonnement infrarouge court) situés en partie basse du tunnel (fig. 8).

Pour assurer la cristallisation du PET amorphe des goulots des récipients, le four de cristallisation 42 est équipé de deux ensembles parallèles de tubes de chauffage 47 disposés les uns à la suite des autres, de part et d'autre des goulots et à proximité de ceux-ci. Ces tubes 47 émettant un rayonnement infrarouge court qui, traversant en grande partie le PET du goulot qui est relativement transparent pour ce type de rayonnement infrarouge, parvient sur le mandrin 18 situé à l'intérieur du goulot. Le mandrin 18, ainsi chauffé, transmet sa chaleur au PET du goulot avec lequel il est en contact étroit.

Pour accélérer la venue du goulot à la température adéquate pour la cristallisation (110 à 200°C, de préférence 140°C) et pour réduire la longueur de l'unité de traitement thermique 3, il est possible de commencer le chauffage des goulots à l'intérieur du four de recouvrance soit en disposant à cet effet des tubes de chauffage 47 dans la partie haute dudit four de recouvrance, soit (en raison de l'encombrement important dans cette zone) en prolongeant vers le haut les plaques de chauffage 27 comme suggéré en tirets en 48 pour la plaque 27 de la fig. 1.

Pour réduire l'influence néfaste de la chaleur dégagée dans les fours 25 et 42 sur les organes mécaniques en mouvement (en particulier la partie mécanique associée au mandrin 18) et également sur les tubes de chauffage 47 (dont notamment les douilles de raccordement sont détruites par une chaleur excessive), on prévoit un refroidissement par soufflage d'un gaz de refroidissement (de l'air) sur la mécanique surmontant les fours et sur les culots de montage des tubes de chauffage 47. A cet effet, pour ne pas compliquer l'installation, comme montré à la fig. 8, on réalise la partie supérieure du bâti de l'installation (en particulier les longerons 49 supportant les culots des tubes des chauffage 47) sous forme de profilés tubulaires réunis de façon étanche et auxquels sont raccordés des moyens de soufflage (non montrés) d'air de refroidissement. Les profilés 49 sont munis d'ouvertures 50 au droit des culots de montage des tubes 47 et d'ouvertures 51 réparties longitudinalement, au-dessus d'un cache 52 de protection coiffant les tubes 47, pour le soufflage d'air en direction de la partie mécanique en mouvement.

A la sortie du four de cristallisation 42 (fin de la zone 43), on dispose de récipients 53 dont le goulot est entièrement cristallisé (cristallisation sphérolitique) et dont le corps présente un taux de cristallinité atteignant 45 à 50 %.

On notera l'efficacité accrue du four de cristallisation qui est dûe, de même que pour le four de recouvrance, d'une part à un choix approprié des moyens de chauffage et, d'autre part, à un pas ou entre-axe réduit p des récipients 41.

A la zone 43 succède, après un nouveau coude, une zone 54, linéaire, pourvue de moyens de refroidissement contrôlé du corps et du goulots des récipients 53 de façon à laisser se développer la cristallisation sphérolitique des goulots. A ce stade un refroidissement trop important (par exemple jusqu'à une température de 20 à 40°C) ne semble pas approprié, car il serait ensuite nécessaire, avant de procéder au moulage final du corps du récipient pour l'amener à sa forme définitive, de chauffer le corps à la température de ramollissement du PET (de préférence 160 à 240°C) avec un apport important d'énergie calorifique.

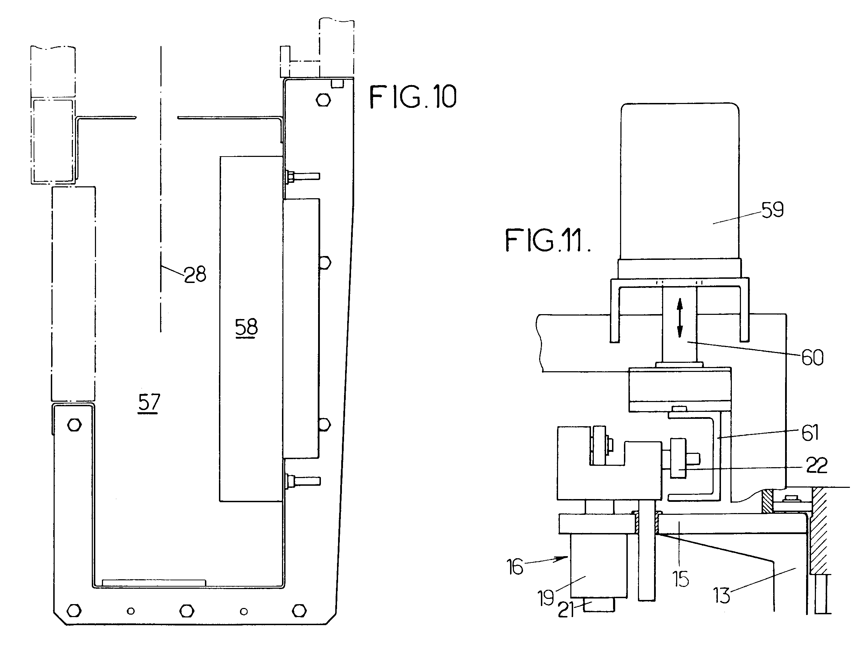

Pour éviter cet inconvénient, les récipients sont maintenus à une température ambiante relativement élevée, par exemple d'environ 80 à 200°C, de préférence d'environ 100 °C, compatible avec la croissance de la cristallisation du PET. A cette fin, comme représenté aux fig. 1, 2 et 9, l'unité de traitement thermique 3 est équipée, dans cette zone 54 de refroidissement contrôlé, de moyens de chauffage d'ambiance 55 qui peuvent être de tout type approprié à cet effet.

A la zone de refroidissement contrôlée 54 succède une nouvelle zone de chauffage 56 constituée par un four de chauffage final 57 apte à chauffer les corps, seuls, des récipients 53 à goulot cristallisé jusqu'à la température de ramollissement du PET. Le four 57 comportent plusieurs plaques de chauffage 58 émettant un rayonnement infrarouge moyen. Les plaques 58 sont tournées vers l'extérieur de l'installation de manière à ne pas influer sur les récipients pénétrant dans l'entrée 2 de l'installation, située à proximité en arrière.

De la même manière que pour le four de recouvrance 25, on accroît la sécurité en prévoyant,dans le four de chauffage final 57, des moyens empêchant les récipients de rester en regard des plaques de chauffage 53 en cas d'arrêt de la chaîne transporteuse 9. Ces moyens sont agencée pour libérer les récipients présents dans le four et provoquer leur chute et ils sont à cet effet agencés comme suit. Un vérin pneumatique 59, porté par le bâti de l'installation, supporte, à l'extrémité de sa tige mobile 60, un tronçon 61 de profilé en U couché dont l'aile inférieure est engagé sous la trajectoire de l'un des galets 22 porté par l'extrémité supérieure de la tige 21 supportant le mandrin 18. L'arrêt de la chaîne transporteuse 9 provoque le déclenchement du vérin pneumatique 59 dont la tige 60 est rappelée vers le haut et entraîne, par l'intermédiaire du profilé 61 et des galets 22, les tiges 21 de tous les organes de préhension 16 présents dans le four. Les mandrins 18, rappelés vers le haut, sortent des goulots des récipients qu'ils supportent et ces derniers tombent.

A la sortie du four de chauffage final 57, la chaîne transporteuse 9 passe sur une roue 62 ; il en résulte un écartement des bras 15 de la chaîne 9, et donc un allongement de l'entre-axe des récipients chauds 53, de sorte qu'ils peuvent alors être aisément saisis par une organe de transfert (non montré) les emmenant dans une unité rotative de moulage 63. En même temps que chaque récipient est saisi par l'organe de transfert, le mandrin 18 qui le supportant est soulevé vers le haut (flèche 64 sur la fig. 1) pour être dégagé du goulot et la chaîne 9 poursuit à vide son trajet jusqu'à la roue 10 située à proximité. Un couloir 65, s'étendant entre la sortie de l'unité de traitement thermique et l'unité de moulage 63, est ménagé pour éviter que les récipients chauds soient refroidis de façon indésirable par d'éventuels courants d'air lors de leur transfert (voir fig. 2).

On peut indiquer ici que, dans la partie haute de la zone 54 de refroidissement contrôlé, sont prévus des moyens de réchauffage des mandrins (non visibles sur les figures) qui sont agencés pour réchauffer les mandrins froids ou refroidis lorsque l'unité de traitement thermique est mise ou remise en fonctionnement après une immobilisation ; ces moyens de réchauffage ne fonctionnent que temporairement, par exemple le temps que tous les mandrins les aient traversés (un tour de la chaîne transporteuse 9). On assure ainsi une meilleure efficacité du traitement thermique des goulots des premiers récipients traités par l'installation lors de sa mise en fonctionnement.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Unité de traitement thermique au défilé utilisée au cours de la fabrication continue de récipients, tels que des bouteilles, en polyéthylènetéréphtalate (PET) aptes à subir, en cours d'utilisation, sans déformations notables, des conditions thermiques relativement sévères rencontrées au cours de processus tels que leur remplissage avec un liquide chaud ou la pasteurisation de leur contenu, ladite unité comportant :
- des moyens de chauffage pour chauffer l'ensemble de chaque récipient, corps et goulot, le corps, en PET ayant préalablement subi une biorientation, étant chauffé à une température d'environ 160 à 240°C pour l'obtention d'une recouvrance, puis d'un accroissement du taux de cristallinité et le goulot en PET encore amorphe étant chauffé dans des conditions de température et de durée propres à assurer la cristallisation sphérolitique du PET du seul goulot ;
- et des moyens de refroidissement agencés pour abaisser la température de l'ensemble de chaque récipient, goulot et corps, le refroidissement du goulot étant conduit de façon relativement lente pour assurer la cristallisation sphérolitique du PET dudit goulot ;
caractérisée en ce que, en combinaison :
- les moyens de chauffage de l'ensemble du récipient comprennent :
= des moyens de chauffage (27, 44) du corps des récipients situés en regard et à proximité du corps et s'étendant de façon continue sur approximativement la hauteur dudit corps, lesdits moyens de chauffage du corps étant agencés pour émettre vers le corps un rayonnement infrarouge moyen ayant une longueur d'onde supérieure ou égale à 2 µm, lesdits moyens de chauffage du corps comprenant des moyens de chauffage (27) pour la recouvrance et des moyens de chauffage (44) pour l'accroissement du taux de cristallinité (cristallisation) du PET du corps ;
= des moyens de chauffage (47) du goulot des récipients s'étendant en regard et à proximité du goulot des récipients et agencés pour émettre vers le goulot un rayonnement infrarouge court ayant une longueur d'onde inférieure ou égale à 2 µm, lesdits moyens de chauffage du goulot étant associés à un mandrin (18) de chauffage interne introduit à l'intérieur du goulot, lesdits moyens de chauffage du goulot s'étendant, au moins en partie, après les moyens de chauffage des corps pour la recouvrance et en combinaison avec les moyens de chauffage pour la cristallisation du corps ;
- et des moyens (9, 10, 15) de modification du pas d'espacement des récipients sont prévus qui sont agencés de manière telle que les récipients présentent un grand pas d'espacement (P) en regard des moyens de chauffage des corps dans la zone de recouvrance, alors que lesdits corps ont une relativement grande dimension transversale, et un pas réduit d'espacement (p) en regard des moyens de chauffage des corps et des goulots dans la zone de cristallisation alors que les corps chauffés se sont rétractés et ont des dimensions transversale et longitudinale réduites.

2. Unité de traitement thermique selon la revendication 1, caractérisée en ce qu'elle comprend en outre des moyens (58) de chauffage final des corps des récipients préalablement au moulage définitif de ceux-ci, lesdits moyens de chauffage final étant situés après les moyens de refroidissement.

3. Unité de traitement thermique selon la revendication 1 ou 2, caractérisée en ce que les moyens (27, 44, 58) de chauffage des corps des récipients sont constitués sous forme de plaques de chauffage s'étendant sur approximativement la hauteur desdits corps et émettant un rayonnement infrarouge moyen de longueur d'onde supérieure ou égale à 2 µm.

4. Unité de traitement thermique selon l'une quelconque des revendications 1 à 3, caractérisée en ce que les moyens (47) de chauffage des goulots des récipients en vue de la cristallisation du PET sont constitués sous forme de tubes de chauffage s'étendant parallèlement à la direction de déplacement des récipients et émettant un rayonnement infrarouge court de longueur d'onde inférieure ou égale à 2 µm.

5. Unité de traitement thermique selon l'une quelconque des revendications 1 à 4, caractérisée en ce qu'elle comprend, pour le transport des récipients, une chaîne transporteuse sans fin (9) comportant une succession de maillons (12) articulés les uns aux autres autour d'axes respectifs (13), chaque maillon (12) étant pourvu d'un organe (16) de support d'un récipient respectif par le goulot de celui-ci ;
en ce que les moyens de modification du pas d'espacement des récipients comprennent :
- des bras radiants (15) solidaires respectivement des maillons (12) de la chaîne transporteuse (9) et s'étendant transversalement auxdits maillons, lesdits bras étant pourvus à leur extrémité libre des susdits organes (16) de support de récipients,
- un support curviligne convexe pour supporter de façon mobile les maillons de la chaîne transporteuse avec les bras desdits maillons s'étendant vers l'extérieur de la convexité, procurant ainsi un grand pas d'espacement entre les récipients, et
- au moins un support rectiligne succédant au susdit support curviligne, pour supporter de façon mobile les maillons de la chaîne transporteuse avec les bras desdits maillons approximativement parallèles entre eux, procurant ainsi un pas réduit d'espacement entre les récipients ;
et en ce que les moyens de chauffage des corps des récipients et les moyens de chauffage des goulots des récipients sont conformés approximativement parallèlement au parcours de la chaîne transporteuse, les moyens de chauffage des corps des récipients pour la recouvrance étant disposés approximativement parallèlement au support curviligne de la chaîne transporteuse et les moyens de chauffage des goulots de récipients étant, au moins en partie, disposés approximativement parallèlement au support rectiligne de la chaîne transporteuse.

6. Unité de traitement thermique selon la revendication 5, caractérisée en ce que le support curviligne de la chaîne transporteuse est une roue tournante (10) et en ce que les moyens (27) de chauffage des corps des récipients pour la recouvrance sont disposés selon un contour approximativement en arc de cercle sensiblement parallèlement au bord de ladite roue (10).

7. Unité de traitement thermique selon l'une quelconque des revendications 1 à 6, caractérisée en ce que les moyens de chauffage pour la cristallisation des goulots s'étendent, en partie (en 48), dans la zone d'implantation des moyens (27) de chauffage des corps des récipients pour la recouvrance.

8. Unité de traitement thermique selon la revendication 7, caractérisée en ce que les moyens de chauffage des goulots et les moyens de chauffage des corps sont combinés au sein de mêmes plaques (48) de grande hauteur s'étendant sur toute la hauteur (corps et goulot) des récipients.

9. Unité de traitement thermique selon l'une quelconque des revendications 1 à 8, caractérisée en ce qu'elle comporte en outre des moyens (8) de préchauffage des goulots des récipients avant que ceux-ci reçoivent lesdits mandrins de chauffage interne du goulot, dont le diamètre externe correspond au diamètre interne des goulots.

10. Unité de traitement thermique selon la revendication 9, caractérisée en ce que chaque organe de support (16) prévu à l'extrémité des bras de la chaîne transporteuse comprend le susdit mandrin mobile (18) apte à être introduit à force dans le goulot du récipient et à supporter chaque récipient suspendu par son goulot.

11. Unité de traitement thermique selon l'une quelconque des revendications 1 à 10, caractérisée en ce qu'elle comporte en outre des moyens (46) de chauffage des fonds des récipients associés aux moyens de chauffage des corps et situés en-dessous de ces derniers et latéralement de manière à chauffer les fonds des récipients sans provoquer une cristallisation de la zone centrale desdits fonds.

12. Unité de traitement thermique selon l'une quelconque des revendications 1 à 11, caractérisée en ce que les moyens de refroidissement comprennent des moyens de chauffage d'ambiance (55) aptes à maintenir autour des récipients une température comprise entre 80 et 200°C, de préférence d'environ 100°C.

13. Unité de traitement thermique selon l'une quelconque des revendications 2 à 12, caractérisée en ce qu'en aval des moyens de chauffage final (57), elle comporte des seconds moyens (62) de modification du pas d'espacement des récipients aptes à accroître le pas d'espacement afin de permettre à un organe de préhension de chaque récipient de s'introduire entre les récipients successifs en vue du transfert des récipients hors de l'unité de traitement thermique.

14. Unité de traitement thermique selon l'une quelconque des revendications 1 à 13, caractérisée en ce qu'elle comprend des moyens de protection thermique des organes mécaniques par soufflage d'un rideau de gaz de refroidissement entre lesdits organes mécaniques et les moyens de chauffage,
en ce que le bâti de l'unité est constitué au moins en partie de profilés tubulaires (49), et
en ce que ledit gaz de refroidissement est distribué (en 51) par lesdits profilés tubulaires.

15. Unité de traitement thermique selon l'une quelconque des revendications 1 à 14, caractérisée en ce que les plaques (27) de chauffage pour la recouvrance sont disposées d'un côté du trajet suivi par les corps des récipients et en ce qu'un miroir (29) est disposé en regard desdites plaques de l'autre côté du trajet suivi par les corps.

16. Unité de traitement thermique selon l'une quelconque des revendications 1 à 14, caractérisée en ce que les plaques (27, 30) de chauffage pour la recouvrance sont disposées face à face, de part et d'autre du trajet suivi par les corps des récipients.

17. Unité de traitement thermique selon l'une quelconque des revendications 1 à 16, caractérisé en ce que des moyens de sécurité (31-35 ; 37-39 ; 59-61) sont associés aux moyens de chauffage constitués de plaques de chauffage et en ce que lesdits moyens de sécurité sont agencés pour provoquer un accroissement de la distance entre lesdites plaques de chauffage et les corps des récipients présents en regard de celles-ci en cas d'immobilisation desdits récipients.

18. Unité de traitement thermique selon la revendication 17, caractérisée en ce que les moyens de sécurité comprennent des moyens de support mobiles des plaques de chauffage aptes à écarter lesdites plaques des corps des récipients immobilisés et en ce que des moyens moteurs non électriques, notamment au moins un vérin pneumatique (35, 39), sont accouplés auxdits moyens de support mobiles.

19. Unité de traitement thermique selon la revendication 18, caractérisée en ce que les moyens de support mobiles comprennent au moins une potence (31) supportant au moins une plaque de chauffage (27) et reposant sur au moins une glissière (32) s'étendant transversalement au trajet des corps des récipients, ce grâce à quoi, étant actionnés, les moyens de sécurité écartent (en 36) les plaques de chauffage transversalement au trajet des corps des récipients immobilisés.

20. Unité de traitement thermique selon la revendication 18, caractérisée en ce que les moyens de support mobiles comprennent au moins une potence solidaire d'au moins une plaque de chauffage (30) et supportée par au moins une glissière verticale (37), ce grâce à quoi, étant actionnés, les moyens de sécurité effacent les plaques de chauffage en les abaissant en-dessous ou en les élevant au-dessus du niveau des corps des récipients immobilisés.

21. Unité de traitement thermique selon la revendication 17, caractérisée en ce que les moyens de sécurité comprennent des moyens de commande à fonctionnement non électrique, notamment au moins un vérin pneumatique (59), aptes à coagir avec les organes (16) de support des récipients pour provoquer la libération et la chute desdits récipients.

22. Unité de traitement thermique selon l'une quelconque des revendications 1 à 21, caractérisée en ce qu'aux plaques de chauffage des corps des récipients pour la recouvrance et/ou la cristallisation sont associés des galets de guidage fou (45) en un matériau inerte vis-à-vis du PET chaud ramolli disposés en regard du bas des corps des récipients, ce grâce à quoi les corps déformés des récipients sont empêchés d'entrer en contact avec lesdites plaques.

23. Unité de traitement thermique selon l'une quelconque des revendications 1 à 22, caractérisée en ce que dans la zone de cristallisation, elle comprend des plots de centrage situés coaxialement en-dessous des susdits mandrins de chauffage interne des goulots et agencés pour coopérer avec les fonds des récipients, lesdits plots de centrage étant mutuellement espacés du même pas que les mandrins et étant déplacés en synchronisme avec ceux-ci.

24. Unité de traitement thermique selon l'une quelconque des revendications 1 à 23, caractérisée en ce qu'elle comporte en outre des moyens de réchauffage des mandrins froids qui sont disposés en aval des moyens de chauffage du corps des récipients et qui sont commandés pour être mis en action pendant le début du fonctionnement de l'unité.

25. Unité de traitement thermique selon l'une quelconque des revendications 2 à 24, caractérisée en ce qu'en aval des moyens de chauffage final (58) elle comporte un couloir (65) traversé par les récipients chauffés par lesdits moyens de chauffage final afin d'éviter leur refroissement.

## Claims

1. A continuous-feed thermal treatment unit for the manufacture of containers, such as bottles, made of polyethyleneterephthalate (PET) and capable of withstanding, during use and without appreciable deformation, relatively severe thermal conditions encountered during processes such as filling the containers with a hot liquid or pasteurization of their contents, said unit comprising :
- heating means for heating the whole -both the body and neck- of each container, the body, constituted of PET having preliminarily undergone bidirectional stretching, being heated to a temperature of approximately 160 to 240°C to produce contractive recovery followed by increased crystallization, and the neck made of still amorphous PET being heated under temperature and time conditions suitable for producing spherulitic crystallization of the PET in the neck alone ;
- and cooling means adapted for lowering the temperature of the whole -both the neck and body- of each container, wherein the neck is cooled relatively slowly to ensure the crystallization of the PET of said neck ;
characterized in that, in combination :
- the heating means for heating the whole of the container comprises:
= heating means (27, 44) for heating the bodies of the containers disposed facing the bodies and in proximity thereto and extending continuously over approximately the height of said bodies, said body-heating means being arranged to emit, in the direction of the bodies, medium-wavelength infrared radiation having a wavelength equal to or greater than 2 µm, said body-heating means comprising first heating means (27) for producing the contractive recovery and second heating means (44) for increasing the crystallization of the PET of the body ;
= heating means (47) for heating the necks of the containers disposed facing the necks and in the vicinity thereof and adapted to emit, in the direction of the necks, short-wavelength infrared radiation having a wavelength equal to or less than 2 µm, said neck-heating means being cooperable with internal heating mandrels (18) individually inserted inside the necks, said neck-heating means being disposed at least partially, following the body-heating means for the contractive recovery and combined with the heating means for the body crystallization ;
- and means (9, 10, 15) for modifying the spacing distance between containers are provided which are arranged in such a manner that a relatively large spacing distance (P) is provided facing body-heating means in the contractive recovery zone whereat said bodies have a relatively large transverse dimension, and a reduced spacing distance (p) is provided facing body-and neck- heating means in the crystallization zone whereat the heated bodies have contracted and have reduced transverse and longitudinal dimensions.

2. A thermal treatment unit according to claim 1, characterized by further comprising heating means (58) for finally heating the container bodies before a final molding thereof, said final heating means being positioned following the cooling means.

3. A thermal treatment unit according to claim 1 or 2, characterized in that the container body-heating means (27, 44, 58) are shaped as heating plates extending over approximately the height of said bodies and emitting a medium-wavelength infrared radiation having a wavelength equal to or higher than 2 µm.

4. A thermal treatment unit according to anyone of claims 1 to 3, characterized in that neck-heating means (47) for crystallization of the PET are shaped as heating tubes extending parallel to the path of conveyance of the containers and emitting a short-wavelength infrared radiation having a wavelength equal to or less than 2 µm.

5. A thermal treatment unit according to anyone of claims 1 to 4, characterized
in that it comprises an endless conveyor chain (9) for transporting the containers, said chain having a series of links (12) joined together by respective pivot axes (13), each link being provided with a support means (16) for supporting the neck of one container ;
in that the means for modifying the spacing distance between containers comprises :
- radially-projecting arms (15) rigidly attached respectively to the links of the conveyor chain (9) and extending transversely to said links, said arms being provided at their free end with said container neck supporting means (16) ;
- a convex curvinilear support for movably supporting the links of the conveyor chain while the arms attached to said links extend to the outside of the convexity, thereby providing a large spacing distance between containers ; and
- at least one rectininear support following the curvilinear support for movably supporting the links of the conveyor chain while the arms attached to said links are approximately parallel to one another, thereby providing a reduced spacing distance between containers ;
and in that the container body-heating means and the container neck-heating means are configured approximately parallel to the path of conveyance of the chain, the body-heating means for the contractive recovery approximately parallel to the curvilinear support of the conveyor chain, and the neck-heating means being at least partially disposed parallel to the rectilinear support of the conveyor chain.

6. A thermal treatment unit according to claim 5, characterized in that the curvilinear support of the conveyor chain is a rotating wheel (10) and that the body-heating means (27) for the contractive recovery are disposed in a contour forming approximately an arc of a circle substantially parallel to a rim of said wheel (10).

7. A thermal treatment unit according to anyone of claims 1 to 6, characterized in that the heating means for the crystallization of necks extends partially (48) into an area occupied by the body-heating means (27) for the contractive recovery.

8. A thermal treatment unit according to claim 7, characterized in that the neck-heating means and body-heating means are combined in the same high plates (48) which extend over the entire height (body and neck) of the containers.

9. A thermal treatment unit according to anyone of claims 1 to 8, characterized by further comprising means (8) for preheating the container necks before the mandrels for internally heating the necks are inserted in them, the outer diameter of said mandrels corresponding to the inner diameter of the necks.

10. A thermal treatment unit according to claim 9, characterized in that each supporting means (16) provided at the end of the arms of the chain includes said movable mandrel (18), which is adapted to be forcelly inserted into the container neck and to support each container suspended by its neck.

11. A thermal treatment unit according to anyone of claims 1 to 10, characterized by further comprising means (46) for heating the bottoms of the containers which are associated with and located below the body-heating means and laterally therefrom, so as to heat the container bottoms without causing crystallization of central areas of said bottoms.

12. A thermal treatment unit according to anyone of claims 1 to 11, characterized in that the cooling means comprise surroundings-heating means (55) adapted for maintaining a temperature of between 80 and 200°C, preferably approximately 100°C, surrounding the containers.

13. A thermal treatment unit according to anyone of claims 2 to 12, characterized by comprising, dowstream from the final heating means (57), second means (62) of modification of the spacing distance between containers which are adapted for increasing the spacing distance so as to enable an individual container gripping device to be interposed between successive containers so as to transfer them out the thermal treatment unit.

14. A thermal unit according to anyone of claim 1 to 13, characterized
in that it comprises means for thermally protecting mechanical devices by blowing a curtain of cooling gas between said mechanical devices and the heating means,
that the frame of the unit is made at least partially of tubular sections (49), and
that said cooling gas is distributed through said tubular sections.

15. A thermal treatment unit according to anyone of claims 1 to 14, characterized in that the heating plates (27) for the contractive recovery are positioned on one side of the path of conveyance followed by the container bodies, and that a mirror (29) is positioned facing said plates on the other side of the path of conveyance followed by the bodies.

16. A thermal treatment unit according to anyone of claims 1 to 14, characterized in that heating plates (27, 30) for the contractive recovery are arranged on opposite sides of the path followed by the container bodies.

17. A thermal treatment unit according to anyone of claims 1 to 16, characterized in that safety means (31-35, 37-39, 59-61) are associated with the heating plates means, and that said safety means are adapted for increasing the distance between said heating plates and container bodies located before them in the event of a conveyance stoppage of said containers.

18. A thermal treatment unit according to claim 17, characterized in that said safety means comprise mobile support means for holding the heating plates which are adapted for moving said plates away from stopped container bodies, and that no electrical motor means, particularly at least one pneumatic jack (35, 39), are coupled to said mobile support means.

19. A thermal unit according to claim 18, characterized by that said mobile support means comprises at least one bracket (31) supporting at least one heating plate (27) and resting on at least one slide-track (32) extending transversely in relation to the path of conveyance of the container bodies, whereby said safety means, once activated, moves (36) the heating plates transversely away from the path of conveyance of the stopped container bodies.

20. A thermal treatment unit according to claim 18, characterized in that said mobile support means comprises at least one bracket joined with at least one heating plate (30) and supported by at least one vertical slide-track (37), whereby the safety means, once activated, removes the heating plates by lowering them below or raising them above the stopped container bodies.

21. A thermal treatment unit according to claim 17, characterized in that the safety means comprises no electrically operationable control means, particularly at least one pneumatic jack (59) cooperable with the container supporting means (16) to cause the release and fall of said containers.

22. A thermal treatment unit according to anyone of claims 1 to 21, characterised in that the container body-heating plates for the contractive recovery and/or the crystallization are cooperable with loose guide rollers (45) made of a material which is inert to heat softened PET and positioned opposite a lower part of the container bodies, whereby deformed container bodies are prevented from contacting said plates.

23. A thermal treatment unit according to anyone of claims 1 to 22, characterized by comprising, in the crystallization area, centering pins positioned coaxially beneath said neck internally heating mandrels and cooperable with container bottoms, said centering pins being spaced apart by the same distance as that separating the mandrels and traveling in synchronism therewith.

24. A thermal treatment unit according to anyone of claims 1 to 23, characterized further comprising means for reheating cold mandrels positioned downstream from the body-heating means, said reheating means being controlled so as to be activated during start-up of the unit.

25. A thermal treatment unit according to anyone of claims 2 to 24, characterized by further comprising, downstream from the final heating means (58), a passageway (65) through which the containers heated by said final heating means travel, in order to present them from cooling.

## Patentansprüche

1. Einheit für einen thermischen Behandlungsablauf, die bei der kontinuierlichen Herstellung von Behältern, wie Flaschen aus Polyethylenterephthalat (PET), verwendet wird, welche dazu geeignet sind, im Laufe der Benutzung, ohne beachtliche Verformungen, relativ strengen thermischen Bedingungen ausgesetzt zu werden, die ihnen im Prozeßverlauf, wie bei ihrer Füllung mit heißer Flüssigkeit oder der Pasteurisierung ihres Inhalts, begegnen, umfassend:
- Heizmittel zum gemeinsamen Erhitzen von Körper und Hals jedes Behälters, wobei der zuvor einer Bi-Orientierung unterzogene PET-Körper zum Erreichen einer Erholung, nach einer Erhöhung des Kristallinitätsgrades, auf eine Temperatur von etwa 160 bis 240°C erhitzt wird und der noch amorphe PET-Hals unter solchen Temperaturbedingungen und über eine solche Dauer erhitzt wird, die dazu geeignet ist, die sphärolitische Kristallisation des PET des einzelnen Halses sicherzustellen;
- und Abkühlungsmittel, die so angeordnet sind, daß die Temperatur gemeinsam für Hals und Körper jedes Behälters gesenkt wird, wobei die Abkühlung des Halses auf relativ langsame Weise durchgeführt wird, um die sphärolitische Kristallisation des PET des Halses sicherzustellen;
dadurch gekennzeichnet, daß in Kombination:
- die Heizmittel für den gesamten Behälter umfassen:
- Heizmittel (27, 44) des Körpers der Behälter, die gegenüber und nahe an dem Körper angeordnet sind und sich in durchgehender Weise über etwa die Höhe des Körpers erstrecken, wobei die Heizmittel des Körpers derart angeordnet sind, daß sie eine mittlere Infrarotstrahlung mit einer Wellenlänge von größer oder gleich 2 µm auf den Körper emittieren, wobei die Heizmittel des Körpers Heizmittel (27) für die Erholung und Heizmittel (44) für die Erhöhung des Kristallinitätsgrades (Kristallisation) des PET des Körpers aufweisen;
- Heizmittel (47) des Halses der Behälter, die sich gegenüber und nahe an dem Hals der Behälter erstrecken und derart angeordnet sind, daß sie eine kurze Infrarotstrahlung mit einer Wellenlänge von kürzer oder gleich 2 µm auf den Hals emittieren, wobei die Heizmittel des Halses mit einem Dorn (18) zur Innenheizung verbunden sind, der in das Innere des Halses eingeführt ist, wobei sich die Heizmittel des Halses wenigstens teilweise hinter die Heizmittel für die Erholung des Körpers und in Kombination mit den Heizmitteln für die Kristallisation des Körpers erstrecken;
- und Mittel (9, 10, 15) zur Änderung der Schrittweite der Behälter vorgesehen sind, die derart angeordnet sind, daß die Behälter gegenüber den Heizmitteln des Körpers in der Erholungszone, wenn die Körper eine relativ große Seitenabmessung haben, eine große Schrittweite (P) einnehmen und gegenüber den Heizmitteln der Körper und Hälse in der Kristallisationszone eine reduzierte Weite (p), wenn sich die erhitzten Körper zusammengezogen haben und verringerte Seiten- und Längsabmessungen haben.

2. Einheit für eine thermische Behandlung gemäß Anspruch 1, dadurch gekennzeichnet, daß sie weiterhin Mittel (58) zur Finalerhitzung der Behälterkörper vor der Nachformung derselben aufweist, wobei die Mittel zur Finalerhitzung hinter den Abkühlungsmitteln angeordnet sind.

3. Einheit für eine thermische Behandlung gemäß Anspruch 1 oder 2, dadurch gekennzeichnet, daß die Heizmittel (27, 44, 58) der Körper der Behälter in Form von Heizplatten ausgebildet sind, die sich über etwa die Höhe der Körper erstrecken und eine mittlere Infrarotstrahlung mit einer Wellenlänge von größer oder gleich 2 µm emittieren.

4. Einheit für eine thermische Behandlung gemäß einem der Ansprüche 1-3, dadurch gekennzeichnet, daß die Heizmittel (47) der Hälse der Behälter angesichts der Kristallisation des PET in Form von Heizröhren ausgebildet sind, die sich parallel zur Bewegungsrichtung der Behälter erstrecken und eine kurze Infrarotstrahlung mit einer Wellenlänge von weniger oder gleich 2 µm emittieren.

5. Einheit für eine thermische Behandlung gemäß einem der Ansprüche 1-4, dadurch gekennzeichnet, daß sie für den Transport der Behälter eine endlose Förderkette (9) mit einer Folge von Kettengliedern (12) aufweist, die gegenseitig an jeweiligen Achsen (13) gelenkig verbunden sind, wobei an jedem Kettenglied (12) eine Einrichtung (16) zur Abstützung eines Behälters jeweils an seinem Hals vorgesehen ist;
daß die Änderungsmittel der Schrittweite der Behälter umfassen:
- jeweils mit den Kettengliedern (12) der Förderkette (9) einstückig ausgebildete und sich transversal zu den Kettengliedern erstreckende Radialarme (15), wobei an den freien Enden der Arme die oben genannten Einrichtungen (16) zur Abstützung der Behälter vorgesehen sind,
- ein konvex gekrümmtes Lager zum beweglichen Abstützen der Kettenglieder der Förderkette, wobei sich die Arme der Kettenglieder von der Wölbung nach außen erstrecken und so eine große Schrittweite zwischen den Behältern bewirken, und
- wenigstens ein dem gekrümmten Lager nachfolgendes geradliniges Lager zum beweglichen Abstützen der Kettenglieder des Förderbandes, wobei die Arme der Kettenglieder etwa parallel zueinander liegen und so eine verringerte Weite zwischen den Behältern bewirken;
- und daß die Heizmittel der Körper der Behälter und die Heizmittel der Hälse der Behälter ungefähr parallel zur Strecke des Förderbandes ausgebildet sind, wobei die Heizmittel der Körper der Behälter für die Erholung in etwa parallel zum gekrümmten Lager der Förderkette angeordnet sind und die Heizmittel der Hälse der Behälter wenigstens teilweise in etwa parallel zu dem geradlinigen Lager der Förderkette angeordnet sind.

6. Einheit für eine thermische Behandlung gemäß Anspruch 5, dadurch gekennzeichnet, daß das gekrümmte Lager der Förderkette ein Laufrad (10) ist und daß die Heizmittel (27) der Körper der Behälter für die Erholung entsprechend einer in etwa kreisbogenförmigen Kontur, im wesentlichen parallel zum Rand des Rades (10) angeordnet sind.

7. Einheit für eine thermische Behandlung gemäß einem der Ansprüche 1-6, dadurch gekennzeichnet, daß die Heizmittel sich für die Kristallisation der Hälse in einem Abschnitt (in 48) in die Anordnungszone der Heizmittel (27) der Körper der Behälter für die Erholung erstrecken.

8. Einheit für eine thermische Behandlung gemäß Anspruch 7, dadurch gekennzeichnet, daß die Heizmittel der Hälse und die Heizmittel der Körper innerhalb der gleichen Platten (48) von großer Höhe kombiniert sind, die sich über die gesamte Höhe (Körper und Hals) der Behälter erstrecken.

9. Einheit für eine thermische Behandlung gemäß einem der Ansprüche 1-8, dadurch gekennzeichnet, daß sie ferner Mittel (8) zum Vorheizen der Hälse der Behälter bevor diese die Dorne zur Innenheizung des Halses, deren Außendurchmesser dem Innendurchmesser der Hälse entspricht, aufnehmen.

10. Einheit für eine thermische Behandlung gemäß Anspruch 9, dadurch gekennzeichnet, daß jede am Ende der Arme der Förderkette vorgesehene Stützeinrichtung (16) den oben genannten beweglichen Dorn (18) aufweist, der so ausgebildet ist, daß er mit Kraft in den Hals des Behälters einführbar ist und jeden Behälter an seinem Hals hängend trägt.

11. Einheit für eine thermische Behandlung gemäß einem der Ansprüche 1-10, dadurch gekennzeichnet, daß sie ferner Mittel (46) zur Heizung der Behälterböden umfaßt, die mit den Heizmitteln der Körper verbunden sind und unterhalb sowie seitlich der letzteren so angeordnet sind, daß die Böden der Behälter erhitzt werden, ohne eine Kristallisation der zentralen Zone der Böden zu provozieren.

12. Einheit für eine thermische Behandlung gemäß einem der Ansprüche 1-11, dadurch gekennzeichnet, daß die Abkühlungsmittel Umgebungsheizmittel (55) umfassen, die derart ausgebildet sind, daß sie um den Behältern eine Temperatur zwischen 80 und 200°C, vorzugsweise etwa 100°C, aufrechterhalten.

13. Einheit für eine thermische Behandlung gemäß einem der Ansprüche 2-12, dadurch gekennzeichnet, daß sie stromabwärts der Finalheizmittel (57) zweite Mittel (62) zur Änderung der Schrittweite der Behälter aufweist, die derart ausgebildet sind, daß sie die Schrittweite vergrößern, um einem Greiforgan für jeden Behälter zu gestatten, sich im Hinblick auf die Herausführung der Behälter aus der Wärmebehandlungseinheit zwischen die aufeinanderfolgenden Behälter zu bewegen.

14. Einheit für eine thermische Behandlung gemäß einem der Ansprüche 1-13, dadurch gekennzeichnet, daß sie Mittel zum thermischen Schutz der mechanischen Einrichtungen durch Einblasen eines Kühlgasvorhanges zwischen die mechanischen Einrichtungen und die Heizmittel aufweist, daß der Rahmen der Einheit wenigstens teilweise aus Rohrprofilen (49) gebildet ist, und daß das Kühlgas durch die Rohrprofile (bei 51) verteilt wird.

15. Einheit für eine thermische Behandlung gemäß einem der Ansprüche 1-14, dadurch gekennzeichnet, daß die Heizplatten (27) für die Erholung an einem Rand der von den Körpern der Behälter nachgefolgten Strecke angeordnet sind, und daß ein Spiegel (29) auf der in bezug zu den Platten anderen Seite der von den Körpern nachgefolgten Strecke angeordnet ist.

16. Einheit für eine thermische Behandlung gemäß einem der Ansprüche 1-14, dadurch gekennzeichnet, daß die Heizplatten (27, 30) für die Erholung einander gegenüber, beiderseits der von den Körpern der Behälter nachgefolgten Strecke angeordnet sind.

17. Einheit für eine thermische Behandlung gemäß einem der Ansprüche 1-16, dadurch gekennzeichnet, daß Sicherheitsmittel (31-35; 37-39; 59-61) mit den aus den Heizplatten gebildeten Heizmitteln verbunden sind und daß die Sicherheitsmittel angeordnet sind, um eine Zunahme des Abstandes zwischen den Heizplatten und den vorliegenden Behälterkörpern in bezug auf diese für den Fall eines Stillstandes der Behälter zu bewirken.

18. Einheit für eine thermische Behandlung gemäß Anspruch 17, dadurch gekennzeichnet, daß die Sicherheitsmittel Mittel zur beweglichen Abstützung der Heizplatten umfassen, die derart ausgebildet sind, daß sie die Platten von den stillstehenden Behälterkörpern entfernen und daß nichtelektrische Motoreinrichtungen, insbesondere wenigstens ein Pneumatikzylinder (35, 39), an die beweglichen Stützmittel gekuppelt sind.

19. Einheit für eine thermische Behandlung gemäß Anspruch 18, dadurch gekennzeichnet, daß die beweglichen Stützmittel wenigstens einen Träger (31) aufweisen, der wenigstens eine Heizplatte (27) trägt und auf wenigstens einer Führungsschiene (32), die sich quer zu der Strecke der Behälterkörper erstreckt, ruht, durch die, bei Betätigung, die Sicherheitsmittel die Heizplatten quer zur Strecke der stillstehenden Behälterkörper entfernen (nach 36).

20. Einheit für eine thermische Behandlung gemäß Anspruch 18, dadurch gekennzeichnet, daß die beweglichen Stützmittel wenigstens einen Träger aufweisen, der zumindest mit einer Heizplatte (30) einstückig ausgebildet und durch zumindest eine vertikale Führungsschiene (37) abgestützt ist, durch die, bei Betätigung, die Sicherheitmittel die Heizplatten unter Absenkung unter oder Anhebung über das Niveau der stillstehenden Behälterkörper wegbewegen.

21. Einheit für eine thermische Behandlung gemäß Anspruch 17, dadurch gekennzeichnet, daß die Sicherheitsmittel nicht elektrisch funktionierende Steuermittel aufweisen, insbesondere wenigstens einen Pneumatikzylinder (59), die derart ausgebildet sind, daß sie mit den Stützeinrichtungen (16) der Behälter zusammenwirken, um die Freigabe und das Abfallen der Behälter herbeizuführen.

22. Einheit für eine thermische Behandlung gemäß einem der Ansprüche 1-21, dadurch gekennzeichnet, daß an den Heizplatten der Behälterkörper für die Erholung und/oder die Kristallisation lose Führungsrollen (45) aus einem gegenüber dem geschmolzenen, heißen PET inerten Material verbunden sind, die gegenüber dem unteren Ende der Behälterkörper angeordnet sind, durch die die verformten Behälterkörper daran gehindert werden, mit den Platten in Berührung zu gelangen.

23. Einheit für eine thermische Behandlung nach einem der Ansprüche 1-22, dadurch gekennzeichnet, daß sie in der Kristallisationszone Zentrierungsstellen aufweist, die koaxial unterhalb der Dorne zur Innenheizung der Hälse liegen und derart angeordnet sind, daß sie mit den Böden der Behälter kooperieren, wobei die Zentrierungsstellen untereinander die gleichen Schrittweiten haben wie die Dorne und mit diesen synchron angeordnet sind.

24. Einheit für eine thermische Behandlung gemäß einem der Ansprüche 1-23, dadurch gekennzeichnet, daß sie ferner Mittel zur Wiederaufheizung kühler Dorne aufweist, die stromabwärts der Heizmittel der Behälterkörper angeordnet sind und die so gesteuert werden, daß sie während des Betriebsanlaufs der Einheit aktiviert sind.

25. Einheit für eine thermische Behandlung gemäß einem der Ansprüche 2-24, dadurch gekennzeichnet, daß sie stromabwärts der Finalheizmittel (58) einen Durchgang (65) aufweist, der von den durch die Finalheizmittel erhitzten Behältern durchquert wird, um deren Abkühlung zu vermeiden.
